# EUROPEAN PATENT APPLICATION

(11) **EP 2 990 917 A1**
(43) Date of publication of application: **02.03.2016**
(21) Application number: 13854212.1
(22) Date of filing: 31.05.2013
(51) Int. Cl.: G06F 3/042

(54) **INFRARED TOUCH MODULE, INFRARED TOUCHSCREEN, AND DISPLAY APPARATUS**

(30) Priority: 24.04.2013 CN 201310145678
(71) Applicant: BOE Technology Group Co., Ltd., Beijing 100015 (CN)
(72) Inventor: XU, Chao, Beijing 100176 (CN); KIM, Heecheol, Beijing 100176 (CN); ZHANG, Chunfang, Beijing 100176 (CN); WEI, Yan, Beijing 100176 (CN)
(74) Representative: Brötz, Helmut
(86) International application number: PCT/CN2013/076603
(87) International publication number: WO 2014/172959

(57) **Abstract**

Embodiments of the invention provide an infrared touch module, an infrared touch screen panel and a display device. An infrared emitting unit is provided on two adjacent side walls of a circuit board outer frame, and an infrared receiving unit is provided on the other two adjacent side walls of the circuit board outer frame. The infrared emitting unit comprises a plurality of infrared emitters located in the same horizontal plane, and the infrared receiving unit comprises first infrared receivers for receiving infrared light rays in a horizontal direction emitted from respective infrared emitters. The infrared emitting unit further comprises a reflector located above or below each infrared emitter, for reflecting an infrared light that is emitted from each infrared emitter to the reflector along the horizontal direction; and the infrared receiving unit further comprises second infrared receivers for receiving infrared light rays in the horizontal direction reflected by the reflector.

## Description

### TECHNICAL FIELD

Embodiments of the present invention relate to an infrared touch module, infrared touch screen panel and display device.

### BACKGROUND

With the rapid development of display technology, touch screen panels have been gradually spread throughout the people's lives. At present, touch screen panels can be classified according to working principles into resistive touch screen panels, capacitive touch screen panels, infrared touch screen panels, piezoelectric touch screen panels, surface acoustic wave touch screen panels, and so on. Infrared touch screen panels have the characteristics of high stability, high adaptability, long lifetime, good performance and so on, and get more and more attentions and applications.

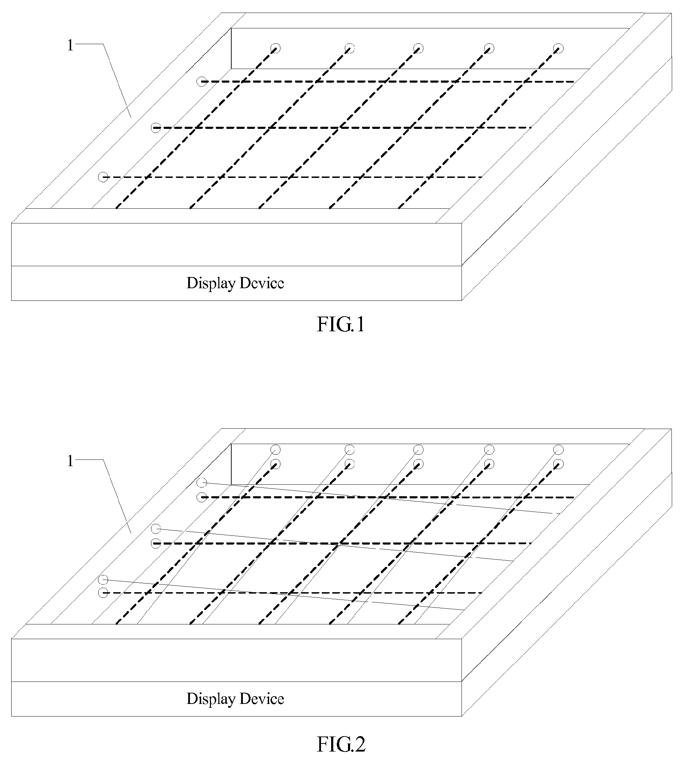

The working principle of infrared touch screen panels is to detect and position a touch operation by utilizing infrared rays densely arranged in both the X and Y directions. As shown in FIG. 1 that illustrates the structure of an infrared touch screen panel, a circuit board outer frame 1 is mounted on the front face of a display device, one layer of infrared emitting tubes (denoted by round dots in the figure) and infrared receiving tubes corresponding to them one-to-one are arranged on the four side walls of the circuit board outer frame 1, respectively, and infrared rays (denoted by dashed lines in the figure) emitted by the infrared emitting tubes crisscross over each other in the same horizontal plane to form an infrared matrix. When a finger touches the screen, the finger will block out two infrared rays in horizontal and vertical directions respectively going through the touch point, and the position of the touch point can be determined by detecting respective infrared receiving tubes.

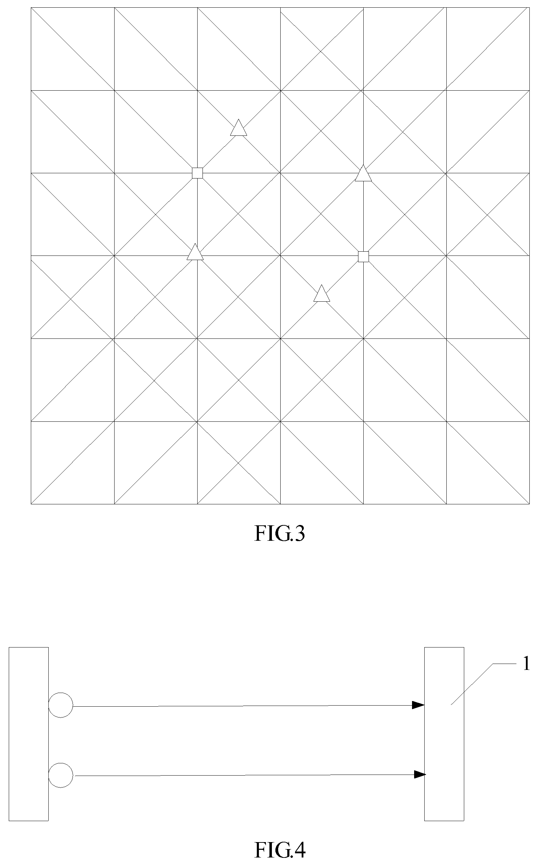

Because positioning of a touch point on the infrared touch screen panel is realized on the basis of the working principle that infrared rays going through the touch point are blocked out, an error will occur upon recognition of a plurality of touch points for the infrared matrix in the above structure. Currently, for realization of multi-point touch recognition of an infrared touch screen panel, as shown in FIG. 2, two layers of infrared emitting tubes (denoted by round dots in the figure) and infrared receiving tubes are provided on the side walls of a circuit board outer frame 1, and infrared light rays emitted by the two layers of infrared emitting tubes form infrared matrices in different directions on two planes (one plane of which is denoted by dashed lines, and another plane is denoted by solid lines), respectively. As can be seen from the top view as shown in FIG. 3, when there are more than one touch point, such as two touch points, the coordinates of fourth points, two of which are ghost points (i.e., points that are not really touched), can be determined by an infrared matrix on a first plane; the coordinates of four points, two of which are ghost points, can also be determined by an infrared matrix on a second plane; and the coordinates of points determined by the infrared matrices on the two planes are compared with each other, in which two pairs of coinciding point coordinates are true coordinates of the two touch points (denoted by squares in the figure), and the other four pairs of point coordinates belong to ghost points (denoted by triangles in the figure).

Although multi-touch points can be identified with the above structure, with reference to the side view shown in FIG. 4, two layers of infrared emitting tubes (denoted by round dots in the figure) need to be provided in the vertical direction of one side wall of the circuit board outer frame 1, and compared with a touch screen panel having a single layer of infrared emitting tubes, the amount of the infrared emitting tubes is doubled, which increases the costs and energy consumption of the infrared touch screen panel.

### SUMMARY

According to embodiments of the present invention, there are provided an infrared touch module, an infrared touch screen panel and a display device, for realizing recognition of multi-point touch at lower costs and with less energy consumption.

An infrared touch module provided by an embodiment of the invention comprises: a circuit board outer frame, an infrared emitting unit mounted on two adjacent side walls of the circuit board outer frame, and an infrared receiving unit mounted on the other two adjacent side walls of the circuit board outer frame. The infrared emitting unit comprises a plurality of infrared emitters located in the same horizontal plane, and the infrared receiving unit comprises a plurality of first infrared receivers corresponding to the infrared emitters one-to-one, each of which receives an infrared light ray in a horizontal direction emitted from a corresponding infrared emitter. The infrared emitting unit further comprises a reflector located above or below each infrared emitter, for reflecting infrared light rays that are emitted from the infrared emitters to the reflector along a horizontal direction; projections on a horizontal plane of an infrared light ray in the horizontal direction emitted by each of the infrared emitters and an infrared light ray in the horizontal direction reflected by a reflector corresponding to the infrared emitter have a set angle therebetween, and the infrared receiving unit further comprises second infrared receivers for receiving infrared light rays in the horizontal direction reflected by the reflector.

An infrared touch screen panel provided by an embodiment of the invention includes: a display panel, and an infrared touch module disposed at a light exiting side of the display panel, the infrared touch module being the above infrared touch module.

A display device provided by an embodiment of the invention comprises the infrared touch screen panel provided by the embodiment of the invention.

### BRIEF DESCRIPTION OF THE DRAWINGS

In order to illustrate the technical solution of the embodiments of the invention more clearly, the drawings of the embodiments will be briefly described below; it is obvious that the drawings as described below are only related to some embodiments of the invention, but not limitative of the invention.
FIG. 1 is a structurally schematic view illustrating a conventional infrared touch screen panel for single-point touch recognition;
FIG. 2 is a structurally schematic view illustrating a conventional infrared touch screen panel for multi-point touch recognition;
FIG. 3 is a view illustrating the working principle of a conventional infrared touch screen panel for multi-point touch recognition;
FIG. 4 is a schematically side view illustrating a conventional infrared touch screen panel for multi-point touch recognition;
FIG. 5 and FIG. 6 are structurally schematic views illustrating an infrared touch module provided by an embodiment of the invention;
FIG. 7 is a schematically side view illustrating an infrared touch module provided by an embodiment of the invention.

### DETAILED DESCRIPTION

In order to make objects, technical details and advantages of the embodiments of the invention apparent, hereinafter, the technical solutions of the embodiments of the invention will be described in a clearly and fully understandable way in connection with the drawings related to the embodiments of the invention. It is obvious that the described embodiments are just a part but not all of the embodiments of the invention. Based on the described embodiments of the invention, those ordinarily skilled in the art can obtain other embodiment(s), without any inventive work, which come(s) within the scope sought for protection by the invention.

The size and shape of components in drawings do not reflect the true scale and are intended to exemplarily explain the disclosures of the invention.

Unless otherwise defined, the technical terminology or scientific terminology used herein should have the same meaning as commonly understood by one of ordinary skill in the art to which this invention belongs. "First", "second" and the like used in specification and claims of the patent application of the invention do not show any order, number or importance, but are only used to distinguish different constituent parts. Likewise, a term "a," "an," or "the" does not indicate limitation in number, but specifies the presence of at least one. The term such as "comprise," "comprising," "include," "including" or the like means that an element or article preceding this term encompasses an element or article listed behind this term and its equivalents, but does not preclude the presence of other element or article. The term such as "connection," "connected" or the like is not limited to physical or mechanical connection, but can include electrical connection, whether directly or indirectly. "On," "under," "left," "right" or the like is only used to describe a relative positional relationship, and when the absolute position of a described object is changed, the relative positional relationship might also be changed accordingly.

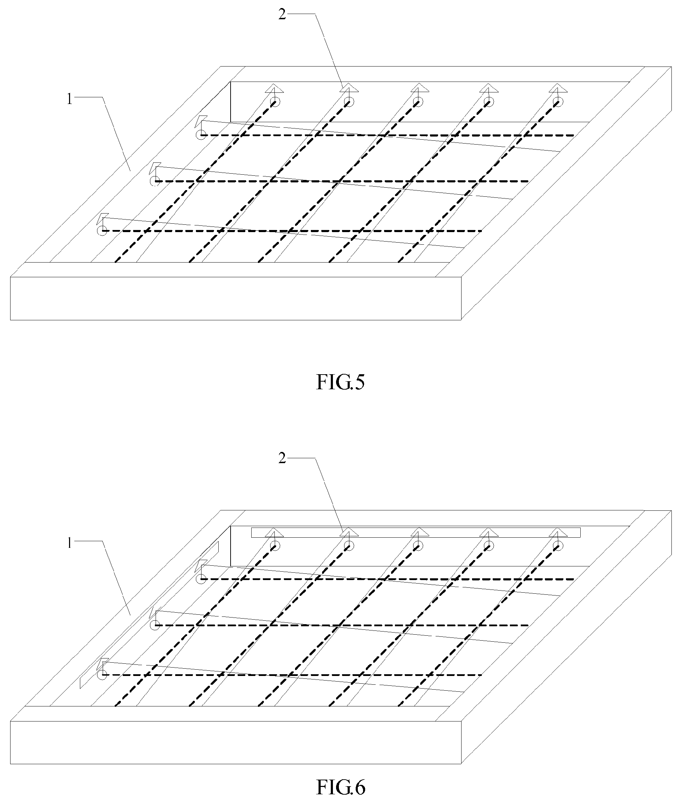

An infrared touch module provided by an embodiment of the invention, as shown in FIG. 5 and FIG. 6, comprises a circuit board outer frame 1, an infrared emitting unit 2 mounted on two adjacent side walls of the circuit board outer frame 1, and an infrared receiving unit mounted on the other two adjacent side walls of the circuit board outer frame 1. In the embodiment as illustrated in the figures, the circuit board outer frame 1 takes the shape of a square, and may be disposed on a display side of a display device.

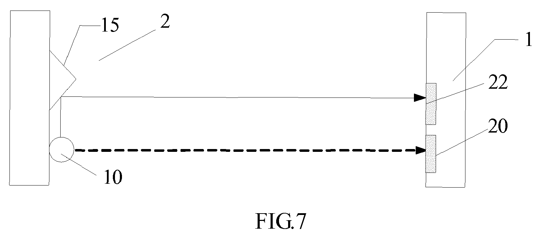

The infrared emitting unit 2 comprises a plurality of infrared emitters 10 (denoted by round dots in the figure) located in a same horizontal plane, the infrared receiving unit comprises a plurality of first infrared receivers 20 (referring to FIG. 7) corresponding to the infrared emitters one-to-one; and each of the first infrared receivers 20 receives an infrared light ray (denoted by a dashed line in the figure) in a horizontal direction emitted by the corresponding infrared emitter 10.

The infrared emitting unit 2 further comprises reflectors 15 located above and/or below the infrared emitters, and the configuration in which reflectors 15 are located above the infrared emitters 10 is illustrated as an example in FIG. 7. The reflectors 15 act to reflect infrared light rays that travel from the infrared emitters 10 to the reflectors 15 along a horizontal direction; and projections, on a horizontal plane, of the infrared light ray (denoted by a dashed line in the figure) in a horizontal direction emitted by each infrared emitter 10 and the infrared light ray (denoted by a solid line in the figure) in another horizontal direction reflected by the reflector 15 corresponding to the infrared emitter 10 have a preset angle therebetween (referring to FIG. 5 and FIG. 6)

The infrared receiving unit further comprises second infrared receivers 22 (referring to FIG. 7) for receiving infrared light rays in the horizontal direction reflected by the reflectors. The first infrared receivers 20 and the second infrared receivers 22 are located on different levels, and are staggered in the side direction of the outer frame.

The infrared touch module provided by the embodiment of the invention, by means of emitting infrared light rays in the horizontal direction from the infrared emitters located in the same horizontal plane to respective first infrared receivers, forms an infrared matrix on one level, and, by means of realizing an infrared emitting structure on another level with reflectors located above or below the infrared emitters for reflecting infrared light rays emitted from the infrared emitters toward them to a horizontal direction, forms an infrared matrix on another level. Multi-point touch can be recognized by these two levels of infrared matrices, and as compared with the mode as shown in FIG. 2 to realize multi-point touch recognition by arranging infrared emitters on upper and lower levels respectively, the number of infrared emitters can be decreased, thereby reducing the production costs and energy consumption of the module.

For example, the infrared emitters in the infrared touch module provided by the embodiment of the invention may comprise infrared emitting tubes, which can emit infrared rays toward multiple directions simultaneously.

Because reflectors 15 may be located above or below infrared emitters 10, and in this way, two levels of infrared matrices are formed in the infrared touch module, two touch points can be recognized accurately. Reflectors 15 may be located both above and below infrared emitters 10 as well, and in this way, three levels of infrared matrices can be formed in an infrared touch module, so more than two touch points can be recognized accurately. In practice, the configuration can be made according to actual requirements or the thickness of the circuit board outer frame, and no limit will be imposed here.

In practice, the reflectors 15 located above and/or below the infrared emitters, as shown in FIG. 5, may be mirrors corresponding to the infrared emitters 10 one-to-one. Namely, one mirror is arranged above and/or below one infrared emitter. If the mirrors are arranged above the infrared emitters 10, then the second infrared receivers 22 are also arranged above the first infrared receivers 21 accordingly, and vice versa.

Preferably, the second infrared receivers 22 correspond to the mirrors one-to-one, namely, one of the mirrors corresponds to one of the second infrared receivers 22.

The mirrors act to change the infrared light rays emitted from the infrared emitters 10 toward these mirrors to be the infrared light rays in a horizontal direction by reflection, these reflected infrared light rays are located in a different horizontal plane from the horizontal direction in which the infrared light rays emitted from the infrared emitters 10 directly toward respective first infrared receivers 21, and these two horizontal planes should not overlap with each other. Furthermore, it is provided that an infrared light ray in the horizontal direction emitted by each of the infrared emitters makes a certain angle with an infrared light ray in the horizontal direction reflected by a reflector corresponding to the infrared emitter, namely, the directions of the two infrared light rays do not conform to each other.

In a specific example, it is possible to use a fine adjustment device for adjusting the angle of the reflecting surface of each mirror, and the angular regulation of an infrared ray reflected by the mirror is realized. The fine adjustment device may be any of existing fine adjustment devices, and details will be omitted here.

In a specific example, the reflectors 15 located above and/or below the infrared emitters, as shown in FIG. 6, may also integrally compose a mirror bar located above and/or below the infrared emitters on the same side wall. Namely, a whole bar of mirror is provided on a side wall of a circuit board outer frame, on which side infrared emitters 10 are mounted, and at the location of the mirror bar corresponding to each infrared emitter 10, there is provided a mirror surface capable of reflecting infrared light rays, the angle of which can be set in advance. The mirror bar is convenient to install compared with individual mirrors but has a higher setting requirement for the angle of each mirror surface in the mirror.

Preferably, in a specific example, each infrared emitter may have an adjustment member for adjusting the light direction of an infrared light ray to be emitted, so as to adjust the angle of the infrared light ray after the completion of assembly of an infrared touch module.

In a specific example, as shown in FIG. 7, an infrared light (denoted by a solid line in the figure) emitted from an infrared emitter 10 toward a reflector 15 and an infrared light (denoted by a dashed line in the figure) emitted from the infrared emitter toward a respective infrared receiver may be perpendicular to each other, and a reflecting surface of the reflector 15 is set to have an angle of 45 degrees with respect to the horizontal plane, so that an infrared light ray in the horizontal direction reflected from the reflector 15 and the infrared light ray in the horizontal direction emitted directly from the infrared emitter toward a first infrared receiver 21 are in parallel to each other. Certainly, the two light rays may also be not perpendicular to each other in practice, and a certain angle between infrared light rays in two horizontal planes can be realized by adjusting the angle of the reflecting surface of each reflector, which is preferably in the range of 10-45 degrees in general.

According to an embodiment of the invention, there is further provided an infrared touch screen panel, comprising a display panel and an infrared touch module disposed on a light exiting side of the display panel. The display panel may be a liquid crystal display panel, an organic electroluminescent display panel or the like flat-plate display panel, may also be a cathode ray tube (CRT) display or the like, and no limit will be imposed thereto here for the invention. The infrared touch module is any of the above-mentioned infrared touch modules provided by the embodiments of the invention. Because the working principle to solve issues of the touch screen panel is similar to that of an aforementioned infrared touch module, implementation of the module can be referred to for implementation of the touch screen panel, and repetitions will not be described.

According to an embodiment of the invention, there is further provided a display device, comprising the above infrared touch screen panel provided by embodiments of the invention. Implementation of the display device can be referred to the embodiments of the above infrared touch screen panel, and repetitions will not be described.

As for an infrared touch module, an infrared touch screen panel and a display device provided by embodiments of the invention, an infrared emitting unit is provided on two adjacent side walls of a circuit board outer frame, and an infrared receiving unit is provided on the other two adjacent side walls of the circuit board outer frame. The infrared emitting unit comprises a plurality of infrared emitters located in the same horizontal plane, and each infrared receiving unit comprises first infrared receivers for receiving infrared light rays in a horizontal direction emitted from respective infrared emitters. The infrared emitting unit further comprises a reflector located above or below each infrared emitter, which reflect an infrared light ray that is emitted from each infrared emitter to the reflector along the horizontal direction; and the infrared receiving unit further comprises second infrared receivers for receiving infrared light rays in the horizontal direction reflected by the reflectors. Multi-point touch recognition is realized with the reflector disposed above and/or below infrared emitters for replacing one layer of infrared emitters, so that the number of infrared emitters arranged on the circuit board outer frame can be decreased. Thereby, the cost and energy consumption of an infrared touch screen panel for realizing the multi-point touch recognition are reduced.

Descriptions made above are merely exemplary embodiments of the invention, but are not used to limit the protection scope of the invention. The protection scope of the invention is determined by attached claims.

## Claims

1. An infrared touch module, comprising: a circuit board outer frame, an infrared emitting unit mounted on two adjacent side walls of the circuit board outer frame, and an infrared receiving unit mounted on the other two adjacent side walls of the circuit board outer frame; wherein,
the infrared emitting unit comprises a plurality of infrared emitters located in a same horizontal plane, the infrared receiving unit comprises a plurality of first infrared receivers corresponding to the infrared emitters one-to-one, each of which receives an infrared light ray in a horizontal direction emitted from a corresponding infrared emitter,
the infrared emitting unit further comprises reflectors each located above or below each of the infrared emitters, for reflecting infrared light rays, which are emitted from the infrared emitters to the reflectors, along a horizontal direction; projections on a horizontal plane of an infrared light ray in the horizontal direction emitted by each of the infrared emitters and an infrared light ray in the horizontal direction reflected by a reflector corresponding to the infrared emitter have a set angle therebetween, and
the infrared receiving unit further comprises second infrared receivers for receiving infrared light rays in the horizontal direction reflected by the reflector.

2. The infrared touch module claimed as claim 1, wherein the reflector comprises mirrors that are located above and/or below the infrared emitters and correspond to the infrared emitters one-to-one.

3. The infrared touch module claimed as claim 2, wherein the second infrared receivers correspond to the mirrors one-to-one.

4. The infrared touch module claimed as claim 2 or 3, wherein the reflectors each comprises a fine adjustment device for adjusting the angle of a reflecting surface of each of the mirrors.

5. The infrared touch module claimed as claim 1, wherein the reflector comprises a mirror bar located above and/or below the infrared emitters on a same side wall.

6. The infrared touch module claimed as claim 1, wherein each of the infrared emitters has an adjustment member for adjusting a light direction of an infrared light ray to be emitted.

7. The infrared touch module claimed as any of claims 1 to 7, wherein an infrared light ray emitted from each of the infrared emitters toward a corresponding reflector and an infrared light ray emitted from the infrared emitter toward a corresponding infrared receiver are perpendicular to each other.

8. The infrared touch module claimed as any of claims 1 to 7, wherein the infrared emitters are infrared emitting tubes.

9. An infrared touch screen panel, comprising: a display panel, and an infrared touch module disposed at a light exiting side of the display panel, the infrared touch module being the infrared touch module claimed as any of claims 1 to 8.

10. A display device, comprising the infrared touch screen panel claimed as claim 9.
